# EUROPÄISCHE PATENTANMELDUNG

(11) **EP 1 327 855 A1**
(43) Veröffentlichungstag der Anmeldung: **16.07.2003**
(21) Anmeldenummer: 02027902.2
(22) Anmeldetag: 13.12.2002
(51) Int. Cl.: G01C 21/34, G08G 1/0968

(54) **System zur Zielführung von Fahrzeugen**

(30) Priorität: 10.01.2002 DE 10200758
(71) Anmelder: DaimlerChrysler AG, 70567 Stuttgart (DE)
(72) Erfinder: Schüssler, Robert, 70597 Stuttgart (DE)

(57) **Zusammenfassung**

Das System zur Zielführung eines Fahrzeugs umfasst einen im Fahrzeug fest eingebauten Systemteil und einen tragbaren Systemteil, wobei der im Fahrzeug fest eingebaute Systemteil mit dem tragbaren Systemteil über mindestens eine Kommunikationsschnittstelle verbunden ist. Auf dem im Fahrzeug fest eingebauten Systemteil wird eine statische Zielführung durchgeführt und auf dem tragbaren Systemteil wird die Dynamisierung der statischen Zielführung durchgeführt.

## Beschreibung

Die Erfindung betrifft ein System zur dynamischen Zielführung von Fahrzeugen.

In der EP 0 838 797 A1 wird ein Zielführungssystem für ein Fahrzeug beschrieben, bei dem eine erste statische Route ohne Berücksichtigung von Verkehrsinformationen berechnet wird. Die Zielführung wird zunächst für die erste Route gestartet und während der Fahrt werden empfangene Verkehrsinformationen bezüglich der Relevanz für die erste Route ausgewertet. Treten für die erste Route relevante Verkehrsinformationen auf, so wird eine zweite dynamische Route unter Berücksichtigung von Verkehrsinformationen berechnet. Die zweite Route wird als Alternativroute dem Fahrer zur Auswahl angeboten, falls die berechnete Fahrzeit auf der Alternativroute kürzer ist als auf der ersten Route. Die Auswahl der Alternativroute erfolgt durch Fahren der Alternativroute.

In der DE 199 56 108 A1 wird ein Verfahren zur dynamischen Zielführung eines Kraftfahrzeugs beschrieben, bei dem bei Auftreten von Verkehrsbehinderungen auf einer ursprünglich berechneten Route Alternativrouten für mehrere Abbiegepunkte berechnet werden, die die Verkehrsbehinderung umgehen. Dem Fahrer werden die Alternativrouten zur Auswahl angeboten. Der Fahrer kann eine Alternativroute über eine Bedieneinheit auswählen. Alternativ dazu kann der Fahrer die Alternativroute durch Fahren der Alternativroute auswählen, wobei das System selbsttätig erkennt, welche der vorgeschlagenen Alternativrouten der Fahrer fährt. Der Fahrer erhält dann zu der erkannten Alternativroute Zielführungsinformationen.

In der WO 00/74019 A1 wird ein Zielführungssystem im Fahrzeug beschrieben, das in Verbindung mit einem portablen Endgerät wie einem PDA (Personal Digital Assistant) oder Mobilfunkgerät genutzt wird. Das portable Endgerät wird genutzt, um Daten in das Zielführungssystem des Fahrzeugs zu laden. Diese Daten sind Zieleingaben des Fahrers, Routeneingaben des Fahrers, Kartendaten oder neue Softwarestände. Die Datenverbindung zwischen dem portablen Endgerät und dem Zielführungssystem im Fahrzeug erfolgt drahtlos oder drahtgebunden.

Aufgabe der Erfindung ist es, ein System zur dynamischen Zielführung von Fahrzeugen der eingangs genannten Art zu schaffen, das eine einfache Trennung von eigentlicher Zielführung und der Dynamisierung der Zielführung ermöglicht.

Die Erfindung löst diese Aufgabe durch die Bereitstellung eines Systems zur dynamischen Zielführung von Fahrzeugen mit den Merkmalen des Anspruchs 1. Die abhängigen Ansprüche betreffen vorteilhafte Aus- und Weiterbildungen der Erfindung.

Bei dem Zielführungsverfahren werden aus einem vorgegebenen Zielort und einem vorgegebenen Startort, z. B. dem aktuellen Ort des Fahrzeugs, in Schritt a) des Verfahrens mehrere Routen zwischen dem aktuellen Ort und dem Zielort berechnet. Diese Berechnung erfolgt auf Grundlage der im Fahrzeug mitgeführten digitalen Karte mit den darin gespeicherten Informationen ohne die Berücksichtigung von dynamischen Zusatzinformationen wie z. B. Verkehrsinformationen. Bei der Ermittlung der statischen Routen können verschiedene Kriterien die Grundlage bilden, z. B. kürzeste Route, schnellste Route, keine gebührenpflichtigen Strecken, keine Autobahn etc. Zusätzlich zu einer so ermittelten optimalen Route werden eine Anzahl von zusätzlichen Routen ermittelt. Dieser Routensatz, bestehend aus mehreren Routen, bildet die Grundlage für den nachfolgenden Schritt b) des Verfahrens.

Im Schritt b) werden von außerhalb des Fahrzeugs empfangene Zusatzinformationen und/oder Zusatzinformationen, die auf einem im Fahrzeug mitgeführten Speicher gespeichert sind, daraufhin ausgewertet, ob sie für den in Schritt a) ermittelten Routensatz relevant sind. Für den Fall von Verkehrsinformationen wird z. B. geprüft, ob eine Verkehrsbehinderung auf einer der Routen liegt, die Bestandteil des Routensatzes ist. Die von extern empfangenen Zusatzinformationen umfassen RDS (Radio Data System) Daten und/oder RDS/TMC (Radio Data System / Traffic Message Channel) Daten und/oder Daten von Informationsdiensten, z. B. auf GSM-Basis, und/oder Daten von Internet- und/oder WAP (Wireless Application Protocol) basierten Diensten. Die Zusatzinformationen, die in dem im Fahrzeug mitgeführten Speicher gespeichert sind, umfassen z. B. Baustelleninformationen, Verkehrsganglinien, prognostizierte Verkehrsinformationen etc. Die Aktualisierung des im Fahrzeug mitgeführten Speichers erfolgt z. B. dadurch, dass der Speicher Bestandteil eines portablen Endgerätes ist, das datentechnisch mit dem Fahrzeug verbindbar ist. Der Fahrer kann das portable Endgerät aus dem Fahrzeug entfernen und z. B. zu Hause mit seinem PC verbinden, um dort aus dem Internet die aktuellen Informationen, z. B. über Baustellen und/oder Informationen über die von ihm anzufahrende Region herunterzuladen. Es ist ebenfalls möglich, aus den empfangenen Zusatzinformationen Prognosen z. B. über die Entwicklung von Verkehrsbehinderungen erstellt zu werden und diese Prognosen im im Fahrzeug mitgeführten Speicher abzulegen.

In Schritt c) wird aus den Routen des Routensatzes die unter Berücksichtigung der Zusatzinformationen optimale Route ermittelt. Bei vorliegenden Verkehrsinformationen wird z. B. die Reisezeit für alle Routen des Routensatzes ermittelt und die optimale dynamische Route derart ausgewählt, dass z. B. die schnellste Route als optimale Route gewählt wird. Diese ermittelte optimale Route ist dann die Route auf Grundlage derer in Schritt d) die Routeninformationen optisch und/oder akustisch an den Fahrer ausgegeben werden.

Ein solches Verfahren zur dynamischen Zielführung ist besonders vorteilhaft, da es eine funktionale Trennung zwischen statischen Zielführung und der Dynamisierung derselben ermöglicht.

Dadurch wird eine vorteilhafte Funktionsteilung zwischen statischen Verfahrensschritten, die auf fest im Fahrzeug verbauten Systemteilen ablaufen, und anderen Verfahrensschritten, die sich auf die Dynamisierung der Routeführung beziehen, möglich. Die Verfahrensschritte bezüglich der Dynamisierung umfassen Prozesse und Optionen, insbesondere bezüglich des Verkehrsdatenangebots und dessen Nutzung, die ständiger Veränderung unterliegen. Z. B. sind Informationsquellen u. U. kurzlebig verglichen mit der Lebensdauer eines Fahrzeugs und gelten u. U. nur für bestimmte Regionen bzw. nur für bestimmte Verkehrswegenetze. Die statischen Verfahrensschritte bleiben über eine längere Laufzeit konstant. Durch die funktionale Trennung der Verfahrensschritte, die sich mit unterschiedlichen Geschwindigkeiten weiterentwickeln, wird also ermöglicht, diese getrennt zu pflegen, getrennt durch neue Versionen zu ersetzen, getrennt mit neuen Unterfunktionen anzureichern etc.

Das Verfahren wertet Zusatzinformationen, insbesondere Verkehrsinformationen, von mehreren Informationsquellen aus und gleicht sie untereinander ab. Diese Informationsquellen umfassen RDS, RDS/TMC, zentralengestützte Dienste, internetbasierte und/oder WAP-basierte Dienste. Auf diese Weise ist eine Dynamisierung der Zielführung auf Basis einer Vielzahl von Daten möglich, was die Aktualität und die Zuverlässigkeit des Verfahrens erhöht. Durch den Abgleich kann außerdem sichergestellt werden, dass alle Zusatzinformationen, die an den Fahrer ausgegeben werden, in sich widerspruchsfrei sind.

Während der Fahrt wird ständig die Sinnhaftigkeit der Routenführung überprüft. Die Zielführung führt dazu eine Art Selbstdiagnose aus, um festzustellen, ob die gegebenen Empfehlungen vor dem Hintergrund der realen Gegebenheiten Sinn machen. Es ist vorteilhaft, aufgrund der Überprüfung der Sinnhaftigkeit der Routenführung zur Erhöhung der Akzeptanz beim Fahrer erläuternde Informationen an den Fahrer auszugeben.

Zur Überprüfung der Sinnhaftigkeit der Routenführung wird beispielsweise verglichen, ob die tatsächlichen Parameter mit den bei der Ermittlung der optimalen Route in Schritt c) ermittelten bzw. zugrundegelegten Parametern übereinstimmen. In einer vorteilhaften Ausführungsform der Erfindung wird während der Fahrt ständig verglichen, ob der tatsächliche Fahrtfortschritt, z. B. in Form des tatsächlich zurückgelegten Weges und/oder der seit Fahrtbeginn vergangenen Zeit, mit dem bei der Ermittlung der optimalen Route in Schritt c) berechneten Fahrtfortschritt übereinstimmt. Dieser ständige Vergleich ist vorteilhaft für die Sicherstellung, dass die dem Fahrer von der Zielführung dargebotenen Informationen widerspruchsfrei sind in Bezug auf seine unmittelbare Vorort-Wahrnehmung. Dies ist insbesondere relevant bei der Verwendung von prognostizierten Zusatzinformationen, insbesondere Verkehrsprognosen. Wenn das prognostizierte Verkehrsgeschehen nicht eintrifft, ist es möglich, dies über den Vergleich tatsächlicher Fahrtfortschritt, unterstellter Fahrtfortschritt festzustellen.

Bei Abweichung der realen Parameter von den ermittelten Parametern der optimalen Route kann dann reagiert werden, um die Qualität der Zielführung zu erhöhen, und/oder um die Akzeptanz beim Fahrer zu erhöhen. Z. B. können weitere, detailliertere, Zusatzinformationen angefordert werden, die dabei unterstützen können, die Abweichung zu erklären bzw. neue Maßnahmen zu ergreifen. Z. B. können auch erläuternde Informationen an den Fahrer ausgegeben werden, die z. B. die Abweichung erklären, und ihm mitteilen, dass z. B. gerade eine Alternativroute gesucht wird.

Bei der Beurteilung der Sinnhaftigkeit der Routenempfehlung ist es weiter vorteilhaft, zu berücksichtigen, dass verschiedene Informationsquellen für Zusatzinformationen vorliegen können. Die Informationsquellen für Zusatzinformationen, die gleichzeitig zur Verfügung stehen, können Unterschiede hinsichtlich der Qualität der Information, z. B. der Richtigkeit und/oder der Aktualität, und/oder der Quantität der Information, z. B. der Vollständigkeit und/oder der Detailtiefe, aufweisen. Diese Unterschiede werden vom Verfahren bei der Auswertung und beim Abgleich berücksichtigt. Es ist weiter vorteilhaft, erläuternden Informationen an den Fahrer auszugeben, die z. B. die Quelle der in der Zielführung berücksichtigten Zusatzinformation mit einer Einschätzung ihrer qualitativen und/oder quantitativen Merkmale umfassen. Durch diese erläuternden Informationen wird der Fahrer in die Lage versetzt, sich selbst ein Bild der Situation und der dem Zielführungsverfahren zugrunde liegenden Informationen zu machen. Dies erhöht bei scheinbaren Fehlern der Zielführung die Akzeptanz beim Fahrer.

In einer vorteilhaften Ausgestaltung der Erfindung die Sinnhaftigkeit der Routenempfehlung überprüft, indem während der Fahrt überprüft wird, ob für die restliche zu fahrende Route relevante Zusatzinformationen vorliegen und/oder neu eintreffen. Die Zusatzinformationen umfassen von extern empfangene Zusatzinformationen und/oder in einem im Fahrzeug mitgeführten Speicher vorliegende Informationen. Es werden ständig die Details der Zusatzinformationen verifiziert. So können während der Fahrt aktiv neue Zusatzinformationen angefordert werden. Z. B. werden bei örtlicher Annäherung an einen Verkehrsstau während der Fahrt aktiv neue Zusatzinformationen, speziell zu dem vor dem Fahrzeug liegenden Verkehrsstau detaillierte und aktuelle Zusatzinformationen angefordert, so dass dann mit den vorliegenden aktuellen und detaillierten Zusatzinformationen präzise reagiert werden kann.

Ergeben sich während der Fahrt neue Gesichtspunkte, z. B. in der Art, dass die realen Parameter von den ermittelten Parametern der optimalen Route abweichen und/oder dass sich die Zusatzinformationen zu der vor dem Fahrzeug liegenden Route ändern, so wird eine dynamische Berechnung der Restroute, d. h. der Route vom aktuellen Ort des Fahrzeugs zum Ziel angestoßen.

Vorteilhafterweise erfolgt die dynamische Berechnung der Restroute mittels dem folgenden Verfahren. In Schritt aa) werden mehrere statische Restrouten zwischen dem aktuellen Ort und dem Zielort berechnet. Für diesen Satz an Restrouten, bestehend aus den mehreren statischen Restrouten, werden in Schritt bb) relevante Zusatzinformationen ermittelt. In Schritt cc) wird unter Berücksichtigung der relevanten Zusatzinformationen eine optimale Restroute ermittelt. Zu dieser Restroute werden in Schritt dd) Zielführungshinweise an den Fahrer ausgegeben. Das Verfahren läuft analog zum Verfahren mit den Schritten a) bis d) ab, bezieht sich aber auf eine Restroute zum Ziel während der Fahrt.

Weiter kann die Akzeptanz beim Fahrer erhöht werden, wenn er, wenn er im z. B. im Stau steht, erläutert bekommt, warum z. B. keine Alternativroute gewählt wurde. Hierdurch wird es dem Fahrer möglich, scheinbare Widersprüche zwischen dem Verhalten der Zielführung und eigenen Zusatzinformationen z. B. aus seiner unmittelbaren Wahrnehmung des lokalen Verkehrsumfeldes aufzulösen.

Das Zielführungssystem umfasst zwei Systemteile. Der erste Systemteil ist fest im Fahrzeug verbaut und umfasst einen Rechner, einen Speicher, insbesondere zum Speichern einer digitalen Karte, eine Eingabeeinheit und eine Ausgabeeinheit. Der zweite Systemteil ist tragbar ausgebildet und umfasst einen Speicher, insbesondere zum Abspeichern von Zusatzinformationen, einen Rechner, eine Empfangseinheit, insbesondere zum Empfangen von Zusatzinformationen, und einen Rechner. Der zweite Systemteil kann als PDA, ein PDA-ähnliches Gerät, als Laptop, als tragbares Mobiltelefon ausgebildet sein. Es kann auch als Gerät ausgebildet sein, dass eine oder mehrere Geräte in einem Gehäuse integriert oder aus mehreren Geräten zusammensteckbar ist.

Auf den fest im Fahrzeug eingebauten Systemteil läuft die statische Zielführung ab, die auf den Daten der in der digitalen Karte gespeicherten Daten basiert. Die statische Zielführung berücksichtigt keine dynamischen Zusatzinformationen. Die Dynamisierung der Zielführung wird auf den tragbaren Systemteil durchgeführt, wo die dynamischen Zusatzinformationen berücksichtigt werden.

Dies ermöglicht eine neuartige Funktionsteilung zwischen statischen Verfahrensschritten, die auf fest im Fahrzeug verbauten Systemteilen ablaufen, und Verfahrensschritten bezüglich der Dynamisierung, die auf portablen, mit den Fahrzeug verbindbaren Systemteilen ablaufen. Diese mit dem Fahrzeug verbindbaren Systemteile sind leicht auswechselbar, mit neuen Softwareständen bespielbar, und somit auch nach Auslieferung des Fahrzeuges leicht änderbar. Dies ist vorteilhaft für die Implementierung von Prozessen und Optionen für die Dynamisierung der Zielführung, die, insbesondere bezüglich des Verkehrsdatenangebots und dessen Nutzung, ständiger Veränderung unterliegen. Mit der erfindungsgemäßen funktionalen Aufteilung auf im Fahrzeug verbaute Systemteile und portable Systemteile wird die Pflege der sich weiterentwickelnden Dynamisierungsfunktionalitäten vereinfacht und ist mit weniger Aufwand möglich.

Vorteilhafterweise erfolgt die Aufteilung der statischen und dynamischen Verfahrensschritte auf den ersten und den zweiten Systemteil im Fahrzeug derart, dass die Schritte a) und d), bzw. aa) und dd) des Zielführungsverfahrens auf dem ersten Systemteil ablaufen, der im Fahrzeug verbaut ist. Die Schritte b) und c), bzw. bb) und cc) des Zielführungsverfahrens laufen auf dem zweiten, portablen Systemteil ab.

Bevorzugte Ausführungsbeispiele der Erfindung werden anhand der zugehörigen Zeichnungen nachfolgend beschrieben. Es zeigen jeweils in schematischer Darstellung,
- **Fig. 1**: ein Blockschaltbild eines Fahrzeugzielführungssystems,
- **Fig. 2**: ein Ablaufdiagramm eines Zielführungsverfahrens,
- **Fig. 3**: ein Ablaufdiagramm eines Zielführungsverfahrens für eine Restroute.

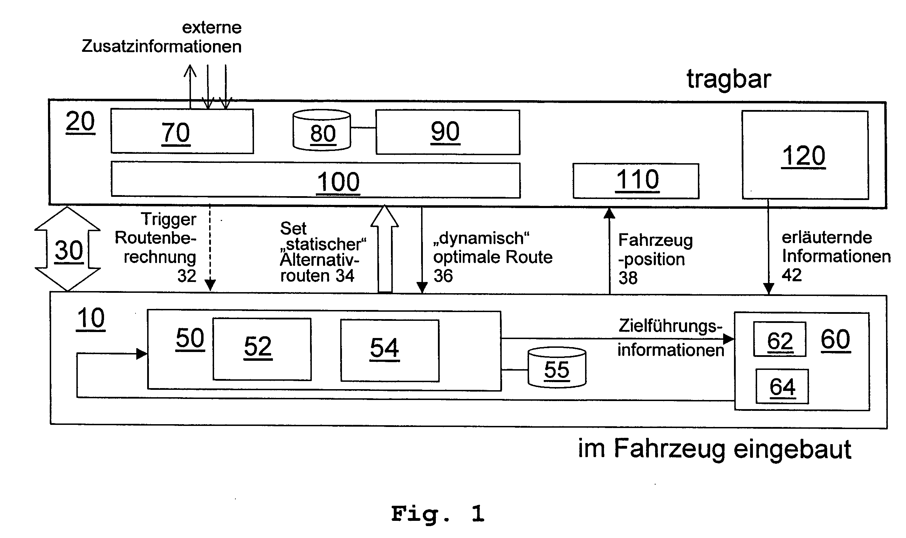

Fig. 1 zeigt in schematischer Darstellung ein Fahrzeugzielführungssystem mit einem fest im Fahrzeug eingebauten ersten Systemteil 10 und einem tragbaren zweiten Systemteil 20 mit einer drahtlosen oder drahtgebundenen Datenverbindung 30. Der Fahrer bzw. Nutzer kann die Datenverbindung z. B. durch einstecken des portablen Systemteils 20 in eine Aufnahmevorrichtung herstellen. Die Aufnahmevorrichtung stellt dann die datentechnische Verbindung mit dem ersten Systemteil 10, sei es drahtgebunden oder drahtlos, her. Die drahtlose Datenverbindung lässt sich z. B. über Infrarot und/oder Funk, z. B. Bluetooth, realisieren. Hierzu kann die entsprechende Schnittstelle, z. B. Bluetooth auch direkt in den portablen Systemteil integriert sein.

Der erste Systemteil 10, kann, wie in Fig. 1 dargestellt in einem Gehäuse untergebracht sein. Es ist aber ebenso möglich, die Module 50, 52, 54, 55, 60, 62, 64 des Systemteils 10 in verschiedenen Gehäusen unterzubringen und z. B. durch ein Datenbussystem zu verbinden.

Daten, die über die Datenverbindung 30 zwischen den fest im Fahrzeug eingebauten Systemteilen 10 und den tragbaren Systemteilen 20 ausgetauscht werden, umfassen z. B. die in Fig. 1 angeführten Beispiele, wie den Trigger zur Neuauslösung einer Routenberechnung 32, den Satz "statischer" Alternativrouten 34, die "dynamisch" optimale Route 36, die Fahrzeugposition 38 und/oder die erläuternden Informationen für den Fahrer 42.
Der fest im Fahrzeug eingebaute Systemteil 10, umfasst das Navigationsmodul 50, den Speicher 55, insbesondere für die digitale Karte, und die Anzeige- und Bedieneinheit 60. Das Navigationsmodul 50, umfasst die Routenberechnung 52 und die Erzeugung der Zielführungsinformationen 54. Nicht in der Figur dargestellt ist die Einheit zur Positionsermittlung des Fahrzeuges, die die Fahrzeugposition 38 ermittelt. Sie kann z. B. über Satellitenortung, wie GPS, erfolgen. Alternativ oder zusätzlich können Fahrzeugsensordaten wie Drehratensensoren, Raddrehzahlsensoren ausgewertet werden. Weitere Möglichkeiten der Ortung bestehen in der Auswertung von Mobilfunkzellen und/oder Funkortung und/oder Baken. Vorteilhafterweise befindet sich die Einheit zur Positionsermittlung im Systemteil 10, da im Fahrzeug die Auswertung von Fahrzeugsensoren leicht möglich ist. Es ist aber durchaus denkbar, im Systemteil 20 die Positionsermittlung durchzuführen, was sich z. B. für die Mobilfunkzellenauswertung oder bei Vorliegen eines Systemteils 20, der GPS beinhaltet, anbietet.

Die Anzeige- und Bedieneinheit 60, umfasst eine Ausgabeeinheit 62 und eine Eingabeeinheit 64. Die Ausgabeeinheit 62 kann als optische und/oder akustische Ausgabeeinheit ausgebildet sein. Sie dient z. B. zur Ausgabe von Zielführungsinformationen. Die Eingabeeinheit 64 dient beispielsweise zur Zieleingabe. Alternativ bietet das System die Möglichkeit, selbsttätig ein Ziel zu erkennen, wenn der Fahrer sich auf einer von ihm häufiger gefahrenen Route bewegt.

Der tragbare Systemteil 20 umfasst einen Speicher 80, insbesondere für gespeicherte "off-line" Verkehrsdaten/-infos, mit zugehöriger Auswerteeinrichtung 90, eine Sende-/ Empfangseinrichtung mit Auswerteeinrichtung 70 für "on-line" verfügbare Zusatzinformationen, die entweder über einen Broadcast-Kanal empfangen werden oder über einen bidirektionalen Kanal empfangen und/oder angefordert und dann empfangen werden. Der tragbare Systemteil 20 umfasst weiter eine Einheit 100 zur Ermittlung der optimalen Route aus dem Satz statischer Alternativrouten 34. Die Einheit 110 überwacht reale Parameter und vergleicht sie mit bei der Ermittlung der optimalen Route unterstellten Parametern. Zur Ermittlung des realen Fahrtfortschritts erhält die Einheit 110 über die Datenverbindung 30 die Fahrzeugposition 38 vom Systemteil 10. Im Speicher 80 kann auch eine digitale Karte gespeichert sein, die detailliert genug ist, um der Einheit 110 die Abbildung des Fahrtfortschritts und die Abbildung der Zusatzinformationen auf die digitale Karte zu ermöglichen.

Die Einheit 120 erzeugt erläuternde Informationen 42. Die erläuternden Informationen 42 werden über die Verbindung 30 an den Systemteil 10 übermittelt und über die Ausgabeeinheit 62 ausgegeben.

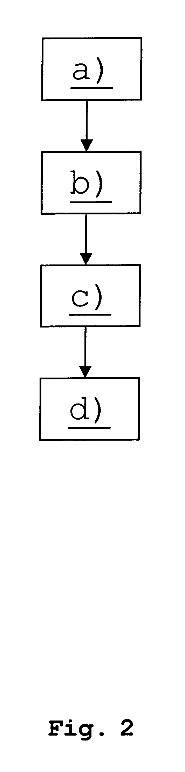

In Fig. 2 ist das Zielführungsverfahren beispielhaft dargestellt. Begonnen wird der Zielführungsvorgang, indem z. B. vom Fahrer bzw. Nutzer über die Eingabeeinheit 64 ein Ziel eingegeben wird und/oder durch das Navigationsmodul 50 eine vom Fahrer häufig benutze Strecke, sowie deren Ziel, erkannt wird. Mittels einer nicht dargestellten Positionsbestimmungseinrichtung wird die aktuelle Position des Fahrzeugs bestimmt. Daraufhin wird in Schritt a), der vorteilhafterweise im Systemteil 10 auf dem Navigationsmodul 50, genauer in der Routenberechnungseinheit 52, abläuft, ein Satz von Routen 34 zwischen der aktuellen Position, die dem Startpunktentspricht, und dem Zielpunkt berechnet. Diese Berechnung erfolgt unter Berücksichtigung der im Speicher 55 gespeicherten digitalen Karte. Der Speicher 55 ist z. B. als Massenspeicher in Form einer CD oder DVD ausgebildet. Der in der Routenberechnungseinheit 52 berechnete Routensatz 34 wird an den Systemteil 20 über die Datenverbindung 30 übergeben. In Schritt b) werden in den Einheiten 70 und 90 für den Routensatz 34 relevante Zusatzinformationen ermittelt. In der Einheit 100 des Systemteils 20 wird in Schritt c) mittels der in den Einheiten 70 und 90 ermittelten für den Routensatz 34 relevanten Zusatzinformationen die Route 36 ermittelt, die bezüglich eines Kriteriums und der Zusatzinformationen optimal ist. Vorteilhafterweise wird als Kriterium der Zeitaufwand für das Zurücklegen der Route gewählt. Es sind aber auch andere Kriterien, wie z. B. geringste Maut etc. denkbar. Die dynamisch optimale Route 38 wird dann über die Datenverbindung 30 an den Systemteil 10 übergeben, wo im Modul 54 zu der Route 38 Zielführungsinformationen generiert und and das Modul 62 zur Ausgabe übergeben werden.

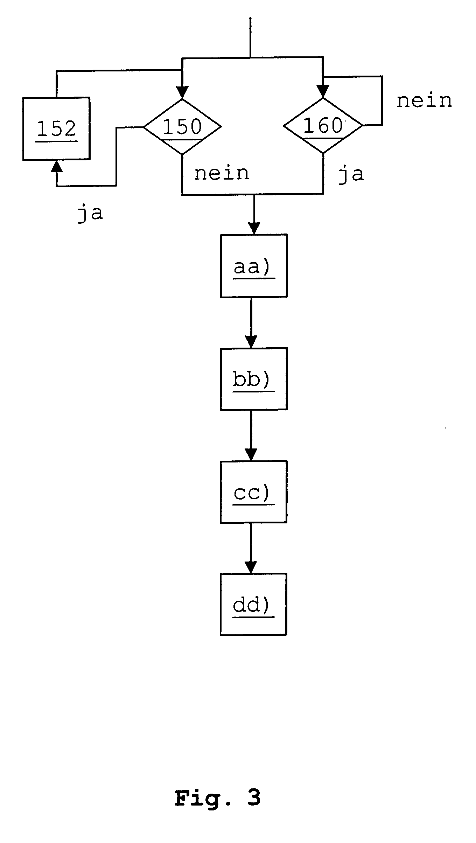

In Fig. 3 ist schematisch beispielhaft der Ablauf Ermittlung einer dynamisch optimalen Restroute während der Fahrt dargestellt.

Während der Fahrt wird in Schritt 150 abgefragt, ob der reale Fahrtfortschritt dem bei der Berechnung der optimalen Route in Schritt c) zugrundegelegte Fahrtfortschritt übereinstimmt. Ist dies nicht der Fall, Zweig "nein", so wird der Trigger Routenberechnung 32 gesetzt. Zusätzlich ist es vorteilhaft, optional in dieser Situation in Schritt 152 erläuternde Informationen 42 an den Fahrer auszugeben, um ihm zu erklären, dass die Fahrt wider erwarten anders verläuft als geplant und dass sich das System mit dem Problem befasst. Das erhöht die Akzeptanz des Systems, da sich der Fahrer mit dem Widerspruch zwischen Realität und Annahmen des Systems nicht allein gelassen fühlt.

Während der Fahrt wird in Schritt 160 ermittelt, ob neue Zusatzinformationen vorliegen. Neue Zusatzinformationen können entweder spontan empfangen worden sein oder konkret vom Systemteil 20 abgefragt worden sein. Es ist z. B. vorteilhaft die Abfrage zu initiieren, wenn sich das Fahrzeug einem prognostizierten Verkehrsstau nähert, um so detaillierte und lokal begrenzte Zusatzinformationen gezielt abzufragen. Es ist ebenfalls sinnvoll, eine Abfrage zu initiieren, wenn in Schritt 150 festgestellt wird, dass reale Parameter nicht mit unterstellten Parametern übereinstimmen, um die Ursache der Diskrepanz über angeforderte Detailinformationen zu ermitteln und ggf. dem Fahrer erläuternde Informationen 42 ausgeben zu können.

Stimmen reale Parametern und unterstellte Parameter nicht überein, Zweig "nein" zu Schritt 150, oder liegen neue Zusatzinformationen vor, Zweig "ja" zu Schritt 160, so wird der Trigger 32 erneut gesetzt und so die Berechnung eines Restroutensatzes, Schritt aa), durch das Modul 52 ausgelöst. Unter Restroutensatzes sind mehrere Routen zu verstehen, die vom aktuellen Ort des Fahrzeugs zum Zielort führen. Das Modul 52 übergibt daraufhin den Restroutensatz, analog zum Routensatz 34, an den Systemteil 20, wo für diesen Restroutensatz, analog zum Routensatz 34, in Schritt bb) die relevanten Zusatzinformationen ermittelt werden. In Schritt cc) wird dann in Modul 100 unter Berücksichtigung der dynamischen relevanten Zusatzinformationen die optimale Restroute, analog zur optimalen Route 36, ermittelt.

An dieser Stelle kann die optimale Restroute an den Systemteil 10 übergeben werden. Im Systemteil 10 findet dann eine Überprüfung statt, ob die optimale Restroute mit der bisherigen geplanten Route übereinstimmt.

Es kann aber auch in Systemteil 20 überprüft werden, ob die optimale Restroute mit der bisherigen geplanten Route übereinstimmt. In dem Fall wird nur eine neue Route an den Systemteil 10 übergeben, falls die ermittelte dynamische optimale Restroute sich von der optimalen Route 36 unterscheidet.

Stimmt die optimale Restroute mit der bisherigen geplanten Route überein, so werden Zielführungshinweise zu der bisherigen Route weiter ausgegeben, für diesen Fall entspricht der Schritt dd) der Fortführung der Ausgabe von Zielführungshinweisen des Schrittes d). In einem solchen Fall ist außerdem es vorteilhaft, erläuternde, widerspruchsfreie, Informationen 42 mit an den Fahrer auszugeben, um die Akzeptanz zu erhöhen, wenn er auf der empfohlenen und als optimal ermittelten Route dennoch im Stau steht. Ein Beispiel für eine solche erläuternde Information könnte sein, auszugeben, dass Alternativrouten geprüft wurden, jedoch noch mehr Fahrzeit beanspruchen würden.

Stimmt die optimale Restroute mit der bisherigen geplanten Route nicht überein, so werden Zielführungshinweise zu der optimalen Restroute in Schritt dd) ausgegeben.

Ein weiterer Vorteil des Zielführungssystems ist, dass es auch ganz ohne den portablen Systemteil die Grundfunktion einer statische Zielführung funktionsfähig ist. Bei Vergessen des portablen Teils oder Verlust desselben, sind so zumindest Zielführungen ohne dynamische Zusatzinformationen möglich.

Es ist außerdem vorteilhaft, dass die Interaktion der Systemteile 10 und 20 vom Fahrer unbemerkt im Hintergrund ablaufen und eine stetige Anpassung der Zielführung an sich ändernde Verkehrssituationen ermöglichen.

## Patentansprüche

1. System zur Zielführung eines Fahrzeugs umfassend
i) einen im Fahrzeug fest eingebauten Systemteil (10) und
ii) einen tragbaren Systemteil (20),
wobei der im Fahrzeug fest eingebaute Systemteil mit dem tragbaren Systemteile über mindestens eine Kommunikationsschnittstelle (30) verbunden ist,
**dadurch gekennzeichnet,**
**dass** auf dem im Fahrzeug fest eingebauten Systemteil (10) eine statische Zielführung durchgeführt wird und
auf dem tragbaren Systemteil (20) die Dynamisierung der statischen Zielführung durchgeführt wird.

2. System zur Zielführung eines Fahrzeugs nach Anspruch 1,
**dadurch gekennzeichnet,**
**dass** auf dem System ein Verfahren zur Zielführung eines Fahrzeuges mit den Schritten
a) Ermittlung mehrerer Routen (34) zwischen einem Startund einem Zielpunkt,
b) Ermitteln von für die berechneten Routen relevanten Zusatzinformationen aus Zusatzinformationen, die von einer externen Sendeeinheit empfangen werden und/oder in einem Speicher (80) gespeichert sind, der im Fahrzeug mitgeführt wird,
c) Ermittlung der unter Berücksichtigung der Zusatzinformationen optimalen Route (36) aus den berechneten Routen,
d) Ausgabe von Zielführungsinformationen zu der optimalen Route, abläuft,
wobei auf dem im Fahrzeug fest eingebauten Systemteil (10) zumindest die Schritte a) und d) ablaufen und
auf dem tragbaren Systemteil (20) zumindest die Schritte b) und c) ablaufen.

3. System zur Zielführung eines Fahrzeugs nach Anspruch 2,
**dadurch gekennzeichnet,**
**dass** bei der Ermittlung der optimalen Route (36) in Schritt c) die Route mit der kürzesten Reisezeit ermittelt wird.

4. System zur Zielführung eines Fahrzeugs nach Anspruch 2 oder 3,
**dadurch gekennzeichnet,**
**dass** die Zusatzinformationen Verkehrsinformationen umfassen.

5. System zur Zielführung eines Fahrzeugs nach Anspruch 2, 3 oder 4,
**dadurch gekennzeichnet,**
**dass** die Zusatzinformationen aus mehreren verschiedenen Quellen bezogen werden.

6. System zur Zielführung eines Fahrzeugs nach einem der Ansprüche 2 bis 5,
**dadurch gekennzeichnet,**
**dass** während der Fahrt eine Überprüfung der Sinnhaftigkeit der Routenempfehlung durchgeführt wird.

7. System zur Zielführung eines Fahrzeugs nach Anspruch 6,
**dadurch gekennzeichnet,**
**dass** die Überprüfung der Sinnhaftigkeit der Routenempfehlung einen Vergleich umfasst, ob die realen Parameter, insbesondere die tatsächliche Reisezeit und die tatsächlich zurückgelegte Strecke, mit den bei der Ermittlung der optimalen Route ermittelten Parametern übereinstimmen.

8. System zur Zielführung eines Fahrzeugs nach einem der Ansprüche 6 oder 7,
**dadurch gekennzeichnet,**
**dass** die Überprüfung der Sinnhaftigkeit der Routenempfehlung eine Beurteilung der Qualität und/oder Quantität der Zusatzinformationen umfasst.

9. System zur Zielführung eines Fahrzeugs nach einem der Ansprüche 6 bis 8,
**dadurch gekennzeichnet,**
**dass** die Überprüfung der Sinnhaftigkeit der Routenempfehlung umfasst, dass während der Fahrt für die restliche zu fahrende Route relevante Zusatzinformationen aus Zusatzinformationen, die von einer externen Sendeeinheit empfangen werden und/oder in einem fahrzeuginternen Speicher (80) gespeichert sind, ermittelt werden.

10. System zur Zielführung eines Fahrzeugs nach einem der Ansprüche 6 bis 9,
**dadurch gekennzeichnet,**
**dass** aufgrund der Überprüfung der Sinnhaftigkeit der Routenempfehlung eine Ermittlung einer Restroute unter Berücksichtigung von relevanten Zusatzinformationen angestoßen wird.

11. System zur Zielführung eines Fahrzeugs nach Anspruch 10,
**dadurch gekennzeichnet,**
**dass** die Ermittlung der Restroute unter Berücksichtigung von relevanten Zusatzinformationen die folgenden Schritte umfasst:
aa) Ermittlung mehrerer Restrouten zwischen dem aktuellen Ort und dem Zielpunkt,
bb) Ermitteln von für die berechneten Restrouten relevanten Zusatzinformationen aus Zusatzinformationen, die von einer externen Sendeeinheit empfangen werden und/oder in einem fahrzeuginternen Speicher (80) gespeichert sind,
cc) Ermittlung der unter Berücksichtigung der Zusatzinformationen optimalen Restroute aus den berechneten Restrouten,
dd) Ausgabe von Zielführungsinformationen zu der optimalen Restroute.

12. System zur Zielführung eines Fahrzeugs nach Anspruch 11,
**dadurch gekennzeichnet,**
**dass** auf dem im Fahrzeug fest eingebauten Systemteil (10) zumindest die Schritte aa) und dd) ablaufen und
auf dem tragbaren Systemteil (20) zumindest die Schritte bb) und cc) ablaufen.

13. System zur Zielführung eines Fahrzeugs nach einem der Ansprüche 2 bis 11,
**dadurch gekennzeichnet,**
**dass** zur Erhöhung der Akzeptanz des Verfahrens beim Fahrer erläuternde Informationen (42) an den Fahrer ausgegeben werden.

14. System zur Zielführung eines Fahrzeugs nach einem der Ansprüche 1 bis 12,
**dadurch gekennzeichnet,**
**dass** der tragbare Systemteil (20) eine Mobilkommunikationseinrichtung umfasst.
